Europäisches Patentamt

European Patent Office

Office européen des brevets

(11) Publication number: **0 403 684**
**A2**

# (12) EUROPEAN PATENT APPLICATION

(21) Application number: **89112785.4**

(22) Date of filing: **12.07.89**

(51) Int. Cl.5: **H01Q 3/02, G05D 3/12, H02P 5/06**

(30) Priority: **22.06.89 US 370338**

(43) Date of publication of application:
**27.12.90 Bulletin 90/52**

(84) Designated Contracting States:
**AT BE CH DE ES FR GB GR IT LI LU NL SE**

(71) Applicant: **Rosen, Howard**
**1 Lyncroft Road**
**Hampstead Québec H3X 3E3(CA)**

(72) Inventor: **April, Georges E.**
**P.O. Box 6079 Station "A"**
**Montréal Québec, H3C H3C 3A7(CA)**

(74) Representative: **Casalonga, Axel et al**
**BUREAU D.A. CASALONGA - JOSSE**
**Morassistrasse 8**
**D-8000 München 5(DE)**

(54) **Antenna positioning system.**

(57) A motor for driving the antenna is connected to a source of power for providing current for driving the motor. The source of power is connected to the motor by a pair of conductors and a voltage is developed across the pair of conductors. The system includes an arrangement for measuring and controlling the speed of the motor and therefore the antenna which includes a current interruption facility for interrupting the current during a current interruption period. The current interruption period is adjustable whereby to adjust the speed of the motor and thereby the antenna. The voltage developed across the pair of conductors is measured during the current interruption period. The voltage measured during the current interruption period is proportional to the speed of the antenna.

Fig. 1

# ANTENNA POSITIONING SYSTEM

The invention relates to improvements in antenna positioning systems for antennae at satellite receiving stations. More specifically, the invention relates to an improved method and system for measuring and controlling the rotational speed of the antenna as it is moved to a new satellite.

Satellite television receiving stations are made up of various parts and components, one of which is the antenna positioner (commonly and incorrectly referred to as the tracker) which may or may not be integrated into the receiver proper.

Normally, these positioners use some type of direct current motor to position the antenna such that it receives transmissions from one satellite, and then to reposition the antenna so that it receives transmissions from another satellite, etc. through some sort of mechanical linkage. Antenna position is usually estimated by counting pulses from some type of device mounted on the motor, the antenna, the antenna mount, or some part of the system that moves as the antenna moves.

Although pulses provide an accurate enough estimate of antenna position, it is difficult, if not impossible, to use them to evaluate the rate of displacement, especially at low speeds, when the time between pulses becomes too long for normal feedback schemes to work properly. It is especially at low speeds, while attempting fine adjustments, either manually or automatically, that speed control is most necessary. The problem is further complicated by the fact that the mechanical load varies (sometimes by orders of magnitude) with antenna position and direction of movement, and to a lesser extent, with atmospheric conditions. Although direct current motors are reputed to have good speed regulation under conditions of varying load, the small motors usually used in this application exhibit poor regulation made worse by the fact that long interconnections are often required, which introduce unavoidable resistive voltage drops, which results in severe degradation of speed regulation characteristics.

Systems for rotating an antenna and for regulating the rotational speed are taught in, for example, U.S. Patent 2,767,363, Chubb, October 16, 1956, U.S. Patent 2,890,401, Stevens et al, June 9, 1959 and U.S. Patent 3,487,277, Walters, December 30, 1969.

The '363 patent teaches a system for stopping antenna rotation at predetermined limits, and for reversing the rotation at the given limits. The '401 and '277 patents teach servo systems for regulating the speed of motors which are driving radar equipment.

Since speed regulation of antenna positioners is important to the accurate positioning of the antenna, it is an object of the present invention to provide a means by which speed, and speed variations, may be sensed.

In accordance with the invention, the voltage across the wires is sampled during periods of current cut-off, at which time it is a linear function of speed.

In accordance with a particular embodiment of the invention, there is provided an antenna positioning system comprising a motor for driving the antenna and a source of power for providing current for driving the motor, the source of power being conductors. The system includes means for measuring and controlling the speed of the antenna, the measuring and controlling means comprising means for interrupting the current for a current interruption period, the current interruption period being adjustable whereby to adjust the speed of the motor, and means for measuring the voltage during the current interruption period. The voltage measured during the current interruption period is proportional to the speed of the antenna.

The invention will be better understood by an examination of the following description, together with the accompanying drawings, in which:

FIGURE 1 illustrates one embodiment of the invention;

FIGURES 2A to 2E are graphs useful in understanding the operation of the Figure 1 embodiment;

FIGURE 3 illustrates a second embodiment of the invention; and

FIGURES 4A to 4E are graphs useful in understanding the operation of the Figure 3 embodiment.

It is a well known fact that all direct current machines, be they motors, generators, or tachymeters, produce, as they move, an electromotive force proportional to their rotational speed. In the case of motors, this electromotive force is usually referred to as "Back-EMF" to indicate the fact that the Back-EMF tends to oppose the passage of current.

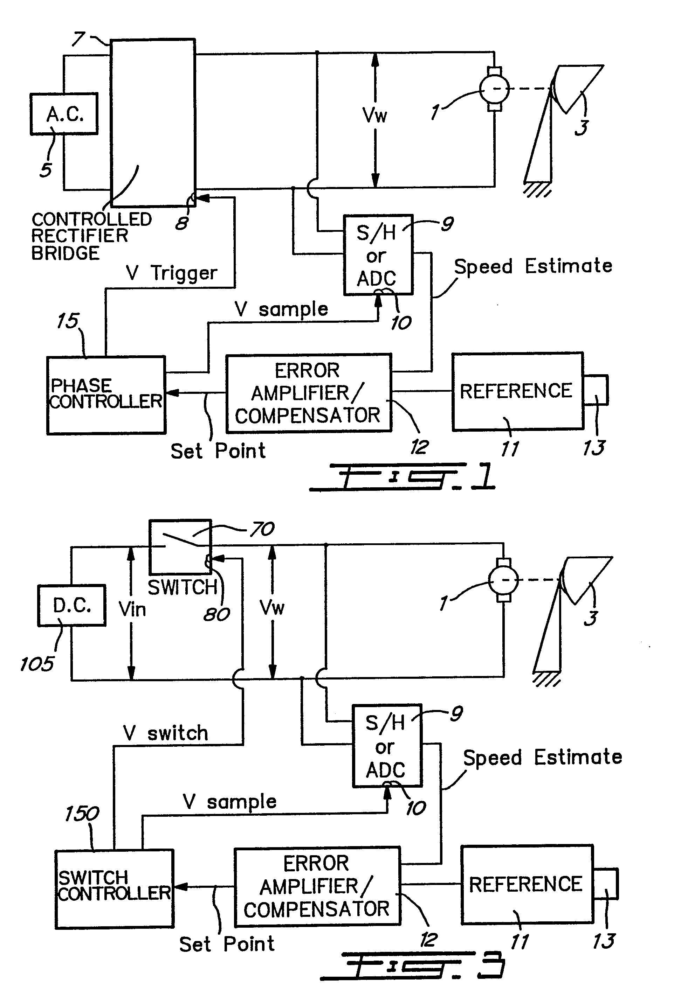

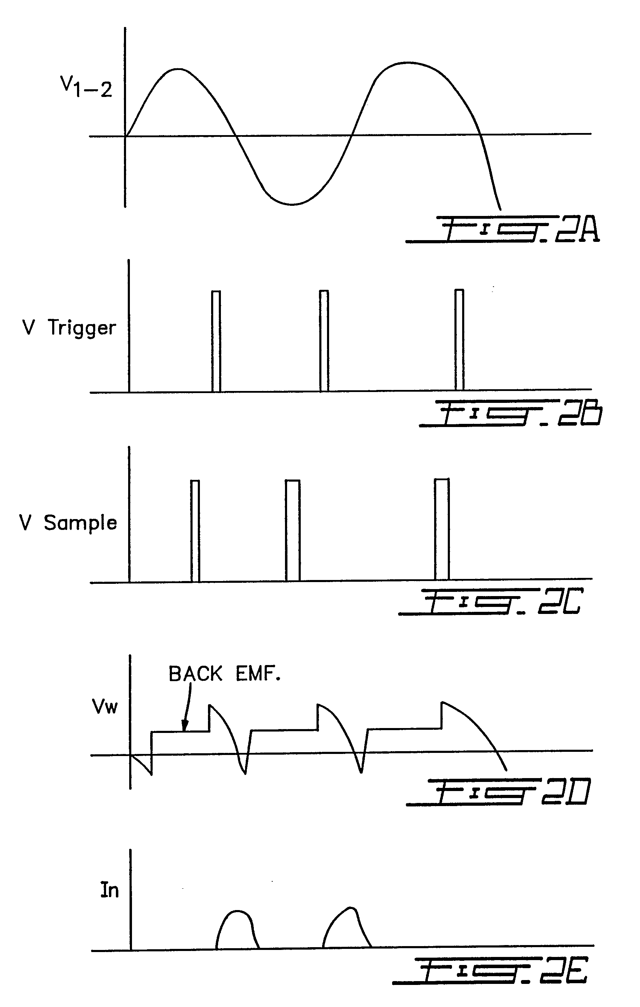

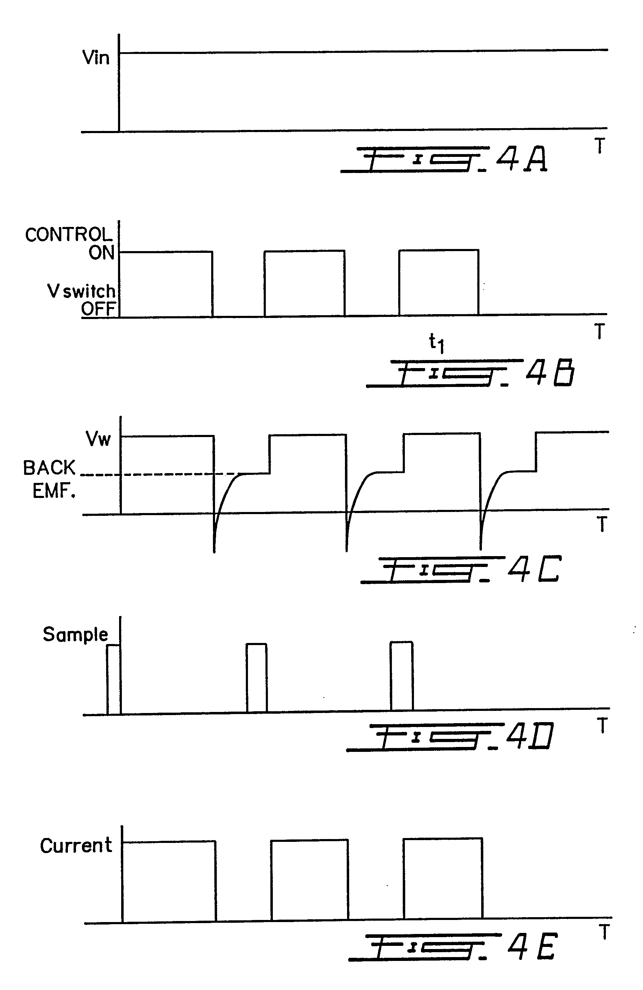

The voltage across the wires powering a direct current motor (see Figures 1 and 3) may be approximately expressed equation by (1) as follows:

$$V_w = k^* S_r + I_a^* R_a + I_m^* R_w + (dI_a/dt)^* L_a + (dI_m/dt)^* L_w \qquad (1)$$

Where

$V_w$ = voltage across the wires powering motor

$S_r$ = speed of rotor (or movable part) of motor

$k$ = proportionality constant, which depends on the motor, and to a lesser extent to the past history of the motor (hysterisis effects)

$I_a$ = motor armature current
$R_a$ = motor armature resistance
$I_m$ = total motor current
$R_w$ = wiring resistance
$L_a$ = armature inductance
$L_w$ = wiring inductance.

In theory, if $R_a$, $R_w$, $L_a$ and $L_w$ could be known or estimated with sufficient accuracy, and if currents $I_a$ and $I_m$ could be measured, knowledge of $V_w$ would allow control circuitry to measure and control the speed $S_r$.

It should be noted that while an error in estimating "k" would result in an absolute error in the speed achieved, this could be easily compensated by a change in the reference voltage, while an error in any of the other parameters would cause the speed to change as the load varies.

In accordance with the present invention, an apparatus and method is proposed by which the effect of all of the unknown parameters listed above (except k) be totally negated allowing the control circuitry to correctly evaluate the Back-EMF, and therefore the speed, of a direct current motor moving a satellite receiving antenna. The factor k can be evaluated during periods of constant speed displacement by measuring the time between position pulses. By comparing these with the measured Back-EMF, a reasonable estimate of k may be obtained, and a smart system could make itself totally independent of the type of motor used which is not necessary for proper operation in most cases.

In accordance with the invention, the voltage across the wires is sampled during short and frequent periods of forced or naturally occuring current interruptions. With proper care, this voltage will then be essentially proportional to the motor speed allowing the control circuitry to control the latter.

The sampling may be accomplished either by analog means, or digitally, by means of some type of analog-to-digital converter (ADC) (as is well known in the art), which may or may not be an integral part of the control circuitry. The result of this sampling may then be used in any type of feedfack speed control.

Referring to Figure 1, an antenna positioning system includes a DC motor 1 which drives the antenna 3. The DC motor is powered by a source of power 5 which in this case comprises a source of AC power. As is well known, the source of power 5 provides current for driving the motor 1.

Included in the system is a means 7 for interrupting the current flow from the source of power 5 to the DC motor 1. The means for interrupting is illustrated schematically in Figure 1 as a controlled rectifier bridge 7 having a control terminal 8. The controlled rectifier bridge could be full wave or half wave, uni-directional or reversible, and could be implemented with any type or mixture of control elements including, but not restricted to, thyristors, diodes and transistors, as is well known in the art.

The means 7 for interrupting comprises one element of a means for measuring and controlling the speed of the antenna. A second element in the measuring and controlling means comprises a sample and hold (S/H) means or ADC means 9, having a control terminal 10. In the sense given to these terms in this application, the "amplifier" and "compensator" could be actual amplifiers and compensating networks, as well as digital circuits (processors), used to calculate and generate the proper switching intervals. In addition, the references of reference 11 in Figures 1 and 3 could be internally generated. Such sample and hold, or analog-to-digital converter means, are well known in the art and require no further description at this time.

The (S/H) means 9 includes two input terminals which are connected across the DC motor to measure the voltage $V_w$ at a time when the current is interrupted. The S/H means 9 includes an output terminal which is fed to one input terminal of error amplifier/compensator 12 whose other input terminal is fed from a source of reference voltage 11. The source of reference voltage 11 is made adjustable by, for example, a potentiometer 13.

The output of the error amplifier/compensator 12 is fed to an input terminal of a phase controller 15 or a like device. The controller 15 has one output terminal fed to the control terminal 8 of the means for interrupting current 7, and a second output connected to a control terminal of the S/H means 9.

Of course, the functions of the error amplifier/compensator, phase controller and S/H or ADC may all be integrated in a single package, especially in digital implementations of the system.

AC power is supplied at some suitable voltage at the input terminals and goes into the controlled rectifier bridge 7 whose output is applied to the wires powering the motor. The phase controller 15 receives a "set point" from the error amplifier/compensator 12 and sends trigger pulses to the converter at the appropriate moment, according to the above-mentioned set point. (See also Figures 2A to 2E.) The trigger pulse turns on the controlled rectifier bridge so that current will flow. Accordingly, a sample must be taken before the trigger pulse is applied. For this purpose, the phase controller 15 has a second output which is triggered prior to the trigger pulse. The secondary output is a sample pulse (see Figure 2C) and is used to sample the voltage across the DC motor 1 while no current is flowing.

The principles of phase controlled converters are well known in the art, and the wave-forms illustrated in Figures 2A to 2E are simply included to illustrate the period during which the voltage may be sampled to obtain a reasonable estimate of Back-EMF.

In the embodiment illustrated in Figure 1, by the very nature of phase controlled rectifier bridges, current is naturally interrupted 120 times per second (when fed from an AC source of 60 hertz) which in most cases amply respects the conditions mentioned above for short and frequent current interruptions.

Figure 3 shows an embodiment which may be used when the available power source is direct current as in the case of recreational vehicles or transportable installations. The Figure 3 embodiment is similar to the Figure 1 embodiment except for the following differences: The controlled rectifier bridge 7 is replaced by a controllable switch 70 having a controlled terminal 80; the phase controller 15 is replaced by a switch controller 150.

Power from the DC source 105 is once again applied to the DC motor 1 through the controllable switch 70. In the Figure 3 embodiment, power to the motor is controlled by varying the duty cycle of the switch 70. This can be accomplished by changing the ON time while maintaining a constant repetition rate. This method is known as Pulse Width Modulation (PWD). Alternatively, the repetition rate can be changed while maintaining either the ON time or OFF time constant. The latter is known as Pulse Rate Modulation (PRM), or by any of a number of other schemes.

As seen in Figures 4A to 4E, the higher the duty cycle, the more power will be applied to the motor. The switch controller 150 adjusts the duty cycle according to the "set point" from the error amplifier/compensator. Once again, the switch controller 150, the S/H 9, the reference 11 and the error amplifier/compensator 12 circuitry can all be integrated into a single unit or even a single integrated circuit. In this case, the switch controller 150 triggers a sampling pulse before turning on the switch. Figures 4A to 4E show typical wave-forms for the embodiment of Figure 3. It is noted that the OFF time should not be made so short that inductive effects do not have sufficient time to die out.

As seen in Figures 4A to 4E, the sample pulse will be applied during the current interruption period, i.e., when the current is zero. The voltage which will be measured by the sample and hold means 9 at that time is the Back-EMF which is proportional to the speed of the motor. The sampled signal is then fed to the error amplifier/compensator 10 where it is compared with the reference voltage obtained from the source of reference voltage 11. In this regard, the source of reference voltage may be either manually adjusted, to provide a voltage level representative of a desired speed, or it may be generated by a processor which may, or may not, be a part of the control system, which also generates a voltage level (or an internal number representing a voltage level) representative of the desired speed of the motor.

The output of the means 10 constitutes a "set point" for the control pulse generator 15 determining the time at which the trigger and sample pulses are generated.

In the case of a PWM control, a number of control circuits, including commercially available integrated circuits, are known to one skilled in the art. Such circuits could directly generate a waveform such as illustrated in Figure 4B. Other circuits would, instead, generate, on separate outputs, a series of "set" and "reset" pulses corresponding to the rising and falling edges of the wave-form in Figure 4B.

When "set" and "reset" pulses are available, it becomes a simple matter to generate the wave-form of Figure 4C by feeding these pulses to the set and reset inputs of a bi-stable multi-vibrator (also known as a flip-flop). The "set" pulse is then used to control the S/H or ADC means 9, while a delayed version of this pulse is fed to the set input of the flip-flop. Various means of producing such delayed pulses include, but are not necessarily restricted to, mono-stable multi-vibrators (also known as one-shots) as is well known to one in the art. The resulting delay in turning ON the current is normally negligible and will be compensated for by the feedback circuitry and/or logic.

It will be seen (from Figures 2A to 2E and Figures 4A to 4E) that the extent of the driving current, and therefore the speed of the motor is effected by the time at which the trigger pulse is generated.

Thus, the means for measuring and controlling the speed of the antenna, consisting of the elements 7 or 70, 9, 12, and 15 or 150 not only measure the speed but also control it as well.

Although the entire system has been illustrated in hardware elements, it will of course be appreciated that the functions of the various hardware elements can be performed by a properly programmed processor. Accordingly, it is within the scope of the invention to provide a processor programmed to perform the functions of the elements as above-described.

Specifically, the elements 10 and 15 would be replaced by an appropriately programmed processor, and 9 would be an ADC (which could also be part of the processor). The reference voltage would be generated by the processor.

Although particular embodiments have been described, this was for the purpose of illustrating, but not limiting, the invention. Various modifications, which will come readily to the mind of one skilled in the art, are within the scope of the invention as defined in the appended claims.

## Claims

1. An antenna positioning system, comprising:
a motor for driving said antenna;
a source of power for providing current for driving said motor, said source of power being connected to said motor by a pair of conductors, a voltage being developed across said pair of conductors;
said system including means for measuring and controlling the speed of said antenna, comprising:
means for interrupting said current for a current interruption period, said current interruption period being adjustable whereby to adjust the speed of said motor to thereby adjust the speed of said antenna; and
means for measuring said voltage during said current interruption period;
said voltage measured during said current interruption period being proportional to the speed of said motor and therefore to the speed of said antenna.

2. A system as defined in claim 1 and including comparator means for comparing said measured voltage with a reference representative of desired speed;
the output of said comparator being fed to said means for interrupting said current to adjust said current interruption period whereby to adjust the speed of said motor, and thereby said antenna, such that it approaches said desired speed.

3. A system as defined in claim 2 wherein said means for interrupting said current comprises a blocking arrangement for blocking current in one position thereof and for permitting current flow in the other position thereof, and having a control terminal;
said means for measuring and controlling further including sample and hold means connected across said pair of conductors and having an output terminal and a control terminal;
the comparator means comprising error amplifier/compensator means having a first input terminal connected to said first output terminal of said sample and hold means and a second input terminal connected to said source of reference voltage, and an output terminal; and
a control pulse generator means having an input terminal and a first output terminal and a second output terminal, said input terminal of said control pulse generator means being connected to said output terminal of said sample and hold means, said first output terminal of said control pulse generator means being connected to the control terminal of said blocking arrangement and said second output terminal of said control pulse generator means being connected to the control terminal of said sample and hold means.

4. A system as defined in claim 3 wherein said source of power comprises a source of AC power;
said blocking arrangement comprising a rectifier bridge having controlled elements;
said control pulse generator means generating a first pulse for activating said sample and hold means and a second pulse for activating said blocking arrangement;
the position of said first pulse being a function of the output of said comparator means.

5. A system as defined in claim 3 wherein said source of power comprises a DC source of power;
said blocking arrangement comprising switch means;
said control pulse generator means generating a first pulse for activating said blocking arrangement and a second pulse for activating said sample and hold means;
the position of said first pulse being a function of the output of said comparator means.

6. A method for measuring and controlling the speed of an antenna, said antenna being positioned by an antenna positioning system comprising, a motor for driving said antenna, a source of power for providing current for driving said motor, said source of power being connected to said motor by a pair of conductors, a voltage being developed across said pair of conductors, said system including means for measuring and controlling the speed of said antenna, comprising, means for interrupting said current for a current interruption period, said current interruption period being adjustable whereby to adjust the speed of said motor whereby to adjust the speed of said antenna, and means for measuring said voltage during said current interruption period, said method comprising:
interrupting said current for a current interruption period;
measuring said voltage during said current interruption period;
said voltage measured during said current interruption period being proportional to the speed of said motor and thereby to the speed of said antenna.

7. A method as defined in claim 6 wherein said system further comprises comparator means for comparing said measured voltage with a reference voltage;
and including the steps of comparing said measured voltage with a reference voltage representative of desired speed;
the output of said comparator means being fed to said means for interrupting said current to adjust said current interruption period whereby to adjust the speed of said motor and thereby said antenna such that it approaches said desired speed.

CONTROLLED
RECTIFIER
BRIDGE

$V_w$

A.C.

V Trigger

S/H or ADC

Speed Estimate

V sample

PHASE CONTROLLER

ERROR AMPLIFIER/ COMPENSATOR

REFERENCE

Set Point

FIG. 1

D.C.

$V_{in}$

SWITCH

$V_w$

V switch

S/H or ADC

Speed Estimate

V sample

SWITCH CONTROLLER

ERROR AMPLIFIER/ COMPENSATOR

REFERENCE

Set Point

FIG. 3

$V_{1-2}$

FIG. 2A

V Trigger

FIG. 2B

V Sample

FIG. 2C

Vw

BACK EMF.

FIG. 2D

In

FIG. 2E

FIG. 4A

FIG. 4B

FIG. 4C

FIG. 4D

FIG. 4E